# EUROPEAN PATENT APPLICATION

(11) **EP 4 395 016 A1**
(43) Date of publication of application: **03.07.2024**
(21) Application number: 23795053.0
(22) Date of filing: 13.04.2023
(51) Int. Cl.: H01M 10/658, H01M 10/6555, H01M 50/209

(54) **BATTERY AND ELECTRIC DEVICE**

(30) Priority: 29.04.2022 CN 202210467669
(71) Applicant: Contemporary Amperex Technology Co., Limited, Ningde, Fujian 352100 (CN)
(72) Inventor: XU, Endong, Ningde, Fujian 352100 (CN)
(74) Representative: Jacob, Reuben Ellis
(86) International application number: PCT/CN2023/088166
(87) International publication number: WO 2023/207620

(57) **Abstract**

The embodiments of the present application provide a battery and an electric device. The battery comprises: a plurality of battery cells, the plurality of battery cells comprising first battery cells and second battery cells, which are adjacent to each other, and the first battery cells and the second battery cells being arranged in a first direction; and a heat insulation plate, which is arranged between the first battery cells and the second battery cells, wherein the heat insulation plate comprises a first heat insulation layer, and the first heat insulation layer is a polymer matrix composite fibre plate. The technical solution of the embodiments of the present application can effectively reduce the risk of thermal runaway diffusion in the battery, and can thus improve the reliability of the battery.

## Description

### Cross-Reference to Related Application

The present application claims priority to Chinese Patent Application No. 202210467669.6, entitled "BATTERY AND ELECTRIC DEVICE" and filed on April 29, 2022, which is incorporated herein by reference in its entirety.

### Technical Field

The present application relates to the technical field of batteries, and particularly to a battery and a power consuming device.

### Background Art

Energy conservation and emission reduction are the keys to the sustainable development of the automobile industry. In this context, electric vehicles play an important part in the sustainable development of the automobile industry because of their advantages in energy conservation and environmental protection. Further, for the electric vehicles, the battery technology is an important factor to their development.

In the development of the battery technology, in addition to improving the performance of batteries, the thermal runaway problem of the batteries is also a non-negligible issue. The spread of thermal runaway of the batteries will bring about great potential safety hazards. Therefore, how to reduce the risk of the spread of thermal runaway inside the batteries is a technical problem urgently to be solved in the battery technology.

### Summary of the Invention

Embodiments of the present application provide a battery and a power consuming device, which can effectively reduce the risk of the spread of thermal runaway inside the battery and thus improve the safety of the battery.

In a first aspect, the present application provides a battery, including: a plurality of battery cells, the plurality of battery cells including a first battery cell and a second battery cell that are adjacent to each other, wherein the first battery cell and the second battery cell are arranged in a first direction; and a heat insulation board, the heat insulation board being provided between the first battery cell and the second battery cell, wherein the heat insulation board comprises a first heat insulation layer, and the first heat insulation layer is a polymer matrix composite fiber board.

In the embodiments of the present application, the heat insulation board is provided between the first battery cell and the second battery cell, so that when some of the battery cells in the battery undergo thermal runaway, the heat insulation board can reduce the risk that the battery cells undergoing the thermal runaway transfers heat to adjacent battery cells, thereby reducing the risk of the spread of thermal runaway in the battery. In the prior art, an aerogel felt or other boards having no structural strength are typically used as the heat insulation board. When pressed between the battery cells, the aerogel felt or other boards having no structural strength will deform and become thinner, and the heat insulation effect thereof is also greatly reduced. However, the heat insulation board in the solution of the present application includes the first heat insulation layer that is a polymer matrix composite fiber board, and the polymer matrix composite fiber board is a high-temperature-resistant, high-strength hard protective board, is less prone to deformation at a high temperature, and is provided between the battery cells, so that the risk of the spread of thermal runaway in the battery can be effectively reduced, and thus the reliability of the battery can be improved.

In a possible implementation, the polymer matrix composite fiber board is a fiber-reinforced resin composite board.

The fiber-reinforced resin composite board is prepared as a protective board by using a resin in polymer materials as a matrix. Compared with other polymer material matrices, the fiber-reinforced resin composite board has better high-temperature resistance and higher strength and is less prone to deformation.

In a possible implementation, the heat insulation board is provided between a first wall of the first battery cell and a second wall of the second battery cell, the first wall is a wall of the first battery cell that has the largest surface area and is closest to the second battery cell, and the second wall is a wall of the second battery cell that has the largest surface area and is closest to the first battery cell.

The heat insulation board is provided between the walls of two adjacent battery cells that each have the largest surface area, such that the heat insulation board can prevent the spread of thermal runaway of the battery cells to a greater extent, which is more conducive to reducing the risk of the spread of thermal runaway in the battery.

In a possible implementation, the heat insulation board includes a second heat insulation layer and two first heat insulation layers, the second heat insulation layer and the two first heat insulation layers are arranged in the first direction, and the second heat insulation layer is located between the two first heat insulation layers.

The first heat insulation layer is a fiber-reinforced resin composite board that has the advantages of high strength, no deformation or damage at a high temperature, etc., the second heat insulation layer is provided between the two first heat insulation layers to form a "sandwich" structure, so that the first heat insulation layer can protect the second heat insulation layer from being pressed to deform by the battery cells, allowing the second heat insulation layer to better provide heat insulation, and enabling the heat insulation board to effectively reduce the risk of the spread of thermal runaway in the battery.

In a possible implementation, the two first heat insulation layers are connected to each other at end portions in a second direction, the second direction being perpendicular to the first direction.

The end portions of the two first heat insulation layers are connected to each other, and the second heat insulation layer is encapsulated between the two first heat insulation layers, so that the second heat insulation layer is protected from being pressed to deform by the battery cells. In addition, the connection between the end portions of the two first heat insulation layers increases the structural strength of the external first heat insulation layers.

In a possible implementation, in the second direction, the two first heat insulation layers are connected to each other in at least one position other than the end portions.

There are multiple connections between the two first heat insulation layers, so that the structural strength of the first heat insulation layers is increased, the second heat insulation layer oppositely provided between the two first heat insulation layers provides better support, and the second heat insulation layer is not pressed to deform by the battery cells.

In a possible implementation, the connection positions of the two first heat insulation layers are uniformly distributed in the second direction.

In a possible implementation, the heat insulation board has a dimension L1 of 0.2 mm-5 mm in the first direction.

When the dimension L1 of the heat insulation board in the first direction is too small, the heat insulation board has a poor heat insulation effect and a low strength, and is likely to be pressed to deform by the battery cells on two sides, resulting in a poorer heat insulation effect; and when the dimension L1 of the heat insulation board in the first direction is too large, too much space is occupied thereby in the battery, and thus the energy density of the battery is reduced. Therefore, the dimension L1 of the heat insulation board is set to 0.2 mm-5 mm in the first direction, so that it is ensured that the battery has a high energy density while ensuring the high strength and the good heat insulation effect of the heat insulation board.

In a possible implementation, the heat insulation board has a dimension L1 of 3 mm in the first direction.

The dimension L1 of the heat insulation board is set to 3 mm in the first direction, so that the heat insulation board has a high strength, is less likely to be pressed to deform, also does not deform at a high temperature, has a good heat insulation effect, can effectively reduce the risk of the spread of thermal runaway in the battery, and does not occupy too much space in the battery, so that it is ensured that the battery has a high energy density.

In a possible implementation, the dimension L1 of the heat insulation board in the first direction and the energy Q of the battery cell satisfy: 2 × 10⁻³ mm/Wh ≤ L1/Q ≤10⁻² mm/Wh.

When the ratio of the dimension L1 of the heat insulation board in the first direction to the energy Q of the battery cell is too small, that is, the dimension L1 of the heat insulation board in the first direction corresponding to the per-unit energy of the battery cell is too small, the heat insulation effect of the heat insulation board is poor; and when the energy Q of the battery cell is constant, the greater L1/Q, that is, the greater L1, the more space is occupied in the battery, and the energy density of the battery is then reduced. Therefore, by setting the condition that the ratio of the dimension L1 of the heat insulation board in the first direction to the energy Q of the battery cell satisfies 2 × 10⁻³ mm/Wh ≤ L1/Q ≤ 10⁻² mm/Wh, it is ensured that the battery has a high energy density while ensuring the good heat insulation effect of the heat insulation board.

In a possible implementation, L1/Q is 8 × 10⁻³ mm/Wh.

The ratio of the dimension L1 of the heat insulation board in the first direction to the energy Q of the battery cell is set to 8 × 10⁻³ mm/Wh, so that the heat insulation board has a good heat insulation effect, can effectively reduce the risk of the spread of thermal runaway in the battery, and does not occupy too much space in the battery, so that it is ensured that the battery has a high energy density.

In a possible implementation, a dimension L2 of the second heat insulation layer in the first direction and the dimension L1 of the heat insulation board in the first direction satisfy: 0.2 ≤ L2/L1 ≤ 0.6.

When L2 is much less than L1, that is, L2/L1 is too small, the second heat insulation layer is thinner than the first heat insulation layer, so the heat insulation effect provided by the second heat insulation layer is poor; and when L2/L1 is too large, the second heat insulation layer is thicker than the first heat insulation layer, that is, the second heat insulation layer occupies most of the heat insulation board, so the heat insulation board has a low strength and is likely to be pressed to deform by the battery cell, and the heat insulation effect thereof is affected. Therefore, by setting 0.2 ≤ L2/L1 ≤ 0.6, the heat insulation effect of the heat insulation board can be ensured, and the risk of the spread of thermal runaway in the battery can be effectively reduced.

In a possible implementation, a dimension L3 of the first heat insulation layer in the first direction is 1 mm, and the dimension L2 of the second heat insulation layer in the first direction is 1 mm.

In this way, the total dimension of the heat insulation board formed by assembling one first heat insulation layer and two second heat insulation layers is 3 mm in the first direction. It is ensured that the heat insulation board has a high strength, is less prone to deformation and has a good heat insulation effect, and it is also ensured that the heat insulation board does not occupy too much space in the battery, and that the battery has a high energy density.

In a possible implementation, the second heat insulation layer is an aerogel felt.

The aerogel felt has the characteristics of being light in weight, easy to cut, low in density, inorganic, fireproof, wholly hydrophobic, green, environmentally friendly, etc., and the heat insulation effect of the aerogel felt is 2-5 times that of a traditional heat insulation material.

In a possible implementation, the second heat insulation layer is an air interlayer.

In this case, a cavity is formed between the two first heat insulation boards. The heat insulation board with this structure not only have a certain structural strength, is less likely to be pressed to deform, is also less prone to deformation at a high temperature, and also has a certain heat insulation effect, so that the risk of the spread of thermal runaway in the battery can be effectively reduced.

In a possible implementation, the first heat insulation layer includes a plurality of fiber-reinforced resin layers, and the fiber-reinforced resin layers are formed by compositing a fiber material and a resin material.

The fiber-reinforced resin composite material has the characteristics of light weight, high strength, high rigidity and high temperature resistance, and the plurality of fiber-reinforced resin layers form the first heat insulation layer. Therefore, the first heat insulation layer has the characteristics of high strength and high temperature resistance, and accordingly it is ensured that the heat insulation board effectively reduces prevents the risk of the spread of thermal runaway in the battery.

In a possible implementation, the resin material is a silicon-based aerogel modified resin or a high-temperature-resistant flame-retardant resin.

The silicon-based aerogel modified resin has the characteristic of low thermal conductivity, and the high-temperature-resistant flame-retardant resin has the characteristics of high temperature resistance and low thermal conductivity. Compared with common resin materials, the silicon-based aerogel modified resin and the high-temperature-resistant flame-retardant resin are composited with a fiber material to form a fiber-reinforced resin composite material that has the characteristics of better high temperature resistance and high strength, and the first heat insulation layer formed by the fiber-reinforced resin composite material can effectively reduce the risk of the spread of thermal runaway in the battery.

In a possible implementation, the fiber material is at least one of a glass fiber, a ceramic fiber, a carbon fiber, a quartz fiber, a high silica fiber, an aluminum silicate fiber, a mullite fiber, a silicon carbide fiber, a silicon nitride fiber, an aluminum oxide fiber, a boron nitride fiber, a basalt fiber, a brucite fiber, an attapulgite fiber, a boron fiber, a carbon nanotube fiber, an aramid fiber, a polyimide fiber, and an ultra-high molecular weight polyethylene fiber.

In a possible implementation, the fiber material is a ceramic fiber material.

The ceramic fiber material has better high temperature resistance than other fiber materials, a composite material of the ceramic fiber material and the resin material has the characteristics of better high temperature resistance and high strength, and the first heat insulation layer formed by the composite material can effectively reduce the risk of the spread of thermal runaway in the battery.

In a possible implementation, the ceramic fiber material is silicon oxide or aluminum oxide.

The first heat insulation layer prepared by compositing the ceramic fiber material made from the silicon oxide or the aluminum oxide and the resin material has the best high temperature resistance.

In a second aspect, the present application provides a power consuming device, including: a battery according to the above first aspect or any possible implementation of the first aspect, the battery being configured to supply electric energy.

In the technical solutions of the embodiments of the present application, the heat insulation board is provided between the first battery cell and the second battery cell that are adjacent to each other, so that when some of the battery cells in the battery undergo thermal runaway, the heat insulation board can reduce the risk that the battery cells undergoing the thermal runaway transfers heat to adjacent battery cells, thereby reducing the risk of the spread of thermal runaway in the battery. In the prior art, an aerogel felt or other boards having no structural strength are typically used as the heat insulation board. When pressed between the battery cells, the aerogel felt or other boards having no structural strength will deform and become thinner, and the heat insulation effect thereof is also greatly reduced. However, the heat insulation board in the solution of the present application includes the first heat insulation layer that is a polymer matrix composite fiber board, and the polymer matrix composite fiber board is a high-temperature-resistant, high-strength hard protective board, is less prone to deformation at a high temperature, and is provided between the battery cells, so that the risk of the spread of thermal runaway in the battery can be effectively reduced, and thus the reliability of the battery can be improved.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making inventive efforts.
FIG. 1 is a schematic structural diagram of a vehicle disclosed in an embodiment of the present application;
FIG. 2 is a schematic exploded structural diagram of a battery disclosed in an embodiment of the present application;
FIG. 3 is a schematic exploded structural diagram of a battery cell according to an embodiment of the present application;
FIG. 4 is a schematic exploded structural diagram of a battery disclosed in an embodiment of the present application;
FIG. 5 is a schematic partial structural diagram of a battery disclosed in an embodiment of the present application;
FIG. 6 is a cross-sectional view of a battery cell and a heat insulation board disclosed in an embodiment of the present application;
FIG. 7 is a cross-sectional view of a battery cell and a heat insulation board disclosed in an embodiment of the present application;
FIG. 8 is a schematic exploded structural diagram of a heat insulation board disclosed in an embodiment of the present application;
FIG. 9 is a schematic exploded structural diagram of a heat insulation board disclosed in an embodiment of the present application;
FIG. 10 is a cross-sectional view of a battery cell and a heat insulation board disclosed in an embodiment of the present application;
FIG. 11 is a cross-sectional view of a battery cell and a heat insulation board disclosed in an embodiment of the present application; and
FIG. 12 is a schematic structural diagram of a fiber-reinforced resin layer disclosed in an embodiment of the present application.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which will not be limited in the embodiments of the present application. The battery cell may be cylindrical, flat, cuboid or in another shape, which will not be limited by the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matter from affecting charging or discharging of the battery cell(s).

The battery cell includes an electrode assembly and an electrolyte solution. The electrode assembly is composed of a positive electrode plate, a negative electrode plate and a separator. The battery cell operates mainly by relying on movements of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium ion battery as an example, the positive electrode current collector may be made from aluminum, and the positive electrode active material may be lithium cobalt oxide, lithium iron phosphate, ternary lithium, lithium manganate, etc. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab. The negative electrode current collector may be made of copper, and the negative electrode active material may be carbon, silicon, etc. In order to ensure that no fusing occurs when a large current passes, a plurality of positive tabs are provided and are stacked together, and a plurality of negative tabs are provided and are stacked together. The separator may be made of polypropylene (PP), polyethylene (PE), etc. In addition, the electrode assembly may be of a wound structure or a laminated structure, which will not be limited in the embodiments of the present application.

The battery may include a plurality of battery cells in order to meet different power demands, with the plurality of battery cells being in series connection, parallel connection or series-parallel connection. The series-parallel connection refers to a combination of series connection and parallel connection. Optionally, the plurality of battery cells may be first connected in series, in parallel or in series-parallel to form battery modules, and then the multiple battery modules are connected in series, in parallel or in series-parallel to form a battery. That is, the plurality of battery cells may directly form a battery, or may form battery modules that may then form a battery. The battery is further arranged in a power consuming device to supply electric energy to the power consuming device.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

In the development of the battery technology, in addition to improving the performance of batteries, the thermal runaway problem of the batteries is also a non-negligible issue. During the use of the batteries, there is an extremely high risk of thermal runaway of the batteries, and the spread of thermal runaway will bring about great potential safety hazards. Therefore, how to reduce the risk of the spread of thermal runaway in the batteries is the focus of researchers.

In view of this, the embodiments of the present application provide a technical solution, in which a heat insulation board is provided between a first battery cell and a second battery cell that are adjacent to each other, so that when some of the battery cells in the battery undergo thermal runaway, the heat insulation board can reduce the risk that the battery cells undergoing the thermal runaway transfers heat to adjacent battery cells, thereby reducing the risk of the spread of thermal runaway in the battery. The heat insulation board in the solution of the present application includes the first heat insulation layer that is a polymer matrix composite fiber board, and the polymer matrix composite fiber board is a high-temperature-resistant, high-strength hard protective board, is less prone to deformation at a high temperature, and is provided between the battery cells, so that the risk of the spread of thermal runaway in the battery can be effectively reduced, and thus the reliability of the battery can be improved.

The technical solution described in the embodiments of the present application are all applicable to various devices using batteries, such as mobile phones, portable apparatuses, laptops, electromobiles, electric toys, electric tools, electric vehicles, ships and spacecrafts. For example, the spacecrafts include airplanes, rockets, space shuttles, space vehicles, etc.

It should be understood that the technical solutions described in the embodiments of the present application are not only applicable to the apparatuses described above, but also applicable to all apparatuses using batteries. However, for the sake of brevity of description, the following embodiments will be described by taking an electric vehicle as an example.

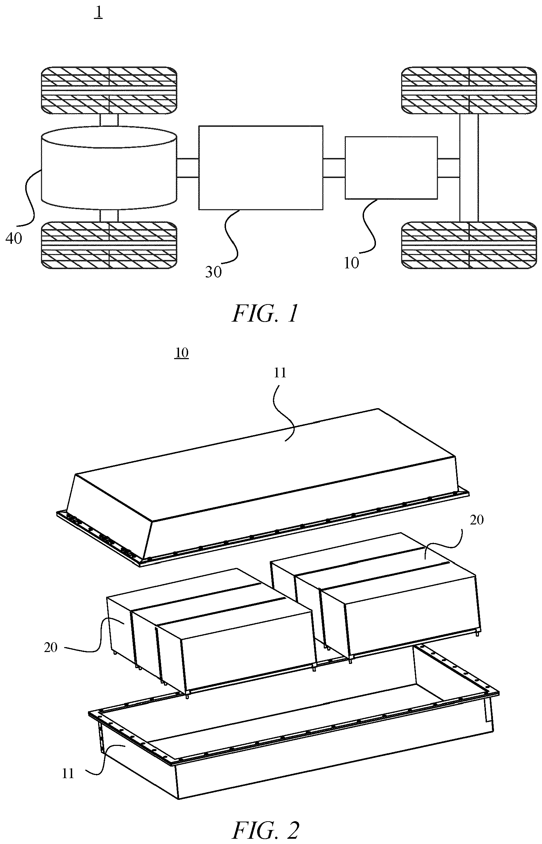

For example, FIG. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. The vehicle 1 may be internally provided with a motor 40, a controller 30 and a battery 10. The controller 30 is used for controlling the battery 10 to supply power to the motor 40. For example, the battery 10 may be arranged at the bottom, the head, or the tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

The battery 10 may include a plurality of battery cells in order to meet different power demands. For example, FIG. 2 shows a schematic structural diagram of a battery 10 according to an embodiment of the present application. The battery 10 may include a plurality of battery cells 20. The battery 10 may further include a case 11. The case 11 has a hollow structure inside, and the plurality of battery cells 20 are accommodated inside the case 11. For example, the plurality of battery cells 20 are in parallel connection, in series connection or in series-parallel connection, and then are placed inside the case 11.

Optionally, the battery 10 may further include other structures, which will not be described in detail herein. For example, the battery 10 may further include a bus component. The bus component is configured to achieve an electrical connection, such as parallel connection, series connection, or series-parallel connection, between the plurality of battery cells 20. Specifically, the bus component may achieve an electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out by means of an electrically conductive structure passing through the case. Optionally, the electrically conductive mechanism may also be a part of the bus component.

Any number of battery cells 20 may be configured according to different power demands. The plurality of battery cells 20 may be connected in series, in parallel or in series-parallel, so as to achieve high capacity or power. Since each battery 10 may include a large number of battery cells 20, and for ease of mounting, the battery cells 20 may be provided in groups, and each group of battery cells 20 forms a battery module. The number of battery cells 20 included in the battery module is not limited and may be set according to demands. The battery may include a plurality of battery modules that may be in series connection, in parallel connection or in series-parallel connection.

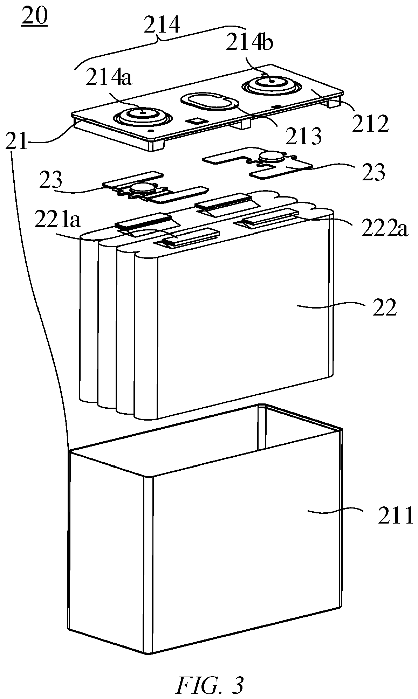

Fig. 3 is a schematic structural diagram of a battery cell 20 according to an embodiment of the present application. The battery cell 20 comprises one or more electrode assemblies 22, a housing 211 and a cover plate 212. The housing 211 and the cover plate 212 form a shell or a battery box 21. Walls of the housing 211 and the cover plate 212 are both referred to as walls of the battery cell 20. For a cuboid battery cell 20, the walls of the housing 211 include a bottom wall and four side walls. The housing 211 may be determined according to the shape of a combination of the one or more electrode assemblies 22. For example, the housing 211 may be a hollow cuboid, cube or cylinder, and one of surfaces of the housing 211 has an opening such that the one or more electrode assemblies 22 can be provided in the housing 211. For example, when the housing 211 is a hollow cuboid or cube, one flat face of the housing 211 is an opening face, i.e., the flat face has no wall, so that the inside and outside of the housing 211 are in communication with each other. When the housing 211 is a hollow cylinder, an end face of the housing 211 is an opening face, i.e., the end face has no wall, so that the inside and outside of the housing 211 are in communication with each other. The cover plate 212 covers the opening and is connected to the housing 211 to form a closed cavity in which the electrode assembly 22 is placed. The housing 211 is filled with an electrolyte, such as an electrolyte solution.

The battery cell 20 may further include two electrode terminals 214, and the two electrode terminals 214 may be provided on the cover plate 212. The cover plate 212 is generally in the form of a flat plate, the two electrode terminals 214 are fixed to a flat plate face of the cover plate 212, and the two electrode terminals 214 are respectively a positive electrode terminal 214a and a negative electrode terminal 214b. Each electrode terminal 214 is correspondingly provided with a connecting member 23 which, also referred to as a current collecting member 23, is located between the cover plate 212 and the electrode assembly 22 to achieve the electrical connection between the electrode assembly 22 and the electrode terminal 214.

As shown in FIG. 3, each electrode assembly 22 is provided with a first tab 221a and a second tab 222a. The first tab 221a and the second tab 222a have opposite polarities. For example, when the first tab 221a is a positive tab, the second tab 222a is a negative tab. The first tab 221a of the one or more electrode assemblies 22 is connected to an electrode terminal by means of a connecting member 23, and the second tab 222a of the one or more electrode assemblies 22 is connected to another electrode terminal by means of another connecting member 23. For example, the positive electrode terminal 214a is connected to the positive tab by means of a connecting member 23, and the negative electrode terminal 214b is connected to the negative tab by means of another connecting member 23.

In the battery cell 20, according to actual usage requirements, one or more electrode assemblies 22 may be provided. As shown in FIG. 3, four separate electrode assemblies 22 are provided in the battery cell 20.

A pressure relief mechanism 213 may further be provided on the battery cell 20. The pressure relief mechanism 213 is configured to be actuated, so as to relieve an internal pressure or temperature when the internal pressure or temperature of the battery cell 20 reaches a threshold.

The pressure relief mechanism 213 may be of a variety of possible pressure relief structures, which will not be limited in the embodiments of the present application. For example, the pressure relief mechanism 213 may be a temperature-sensitive pressure relief mechanism that is configured to melt when the internal temperature of the battery cell 20 provided with the pressure relief mechanism 213 reaches a threshold; and/or the pressure relief mechanism 213 may be a pressure-sensitive pressure relief mechanism that is configured to fracture when the internal pressure of the battery cell 20 provided with the pressure relief mechanism 213 reaches a threshold.

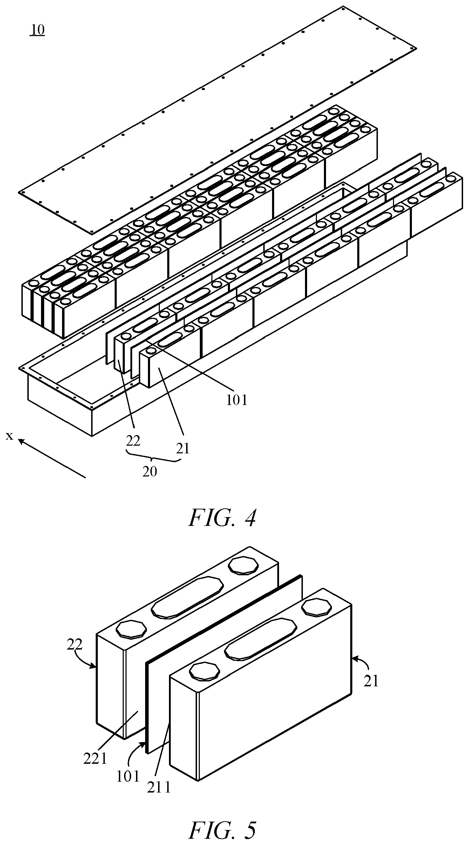

FIG. 4 shows a schematic structural diagram of a battery 10 according to an embodiment of the present application. As shown in FIG. 4, the battery 10 includes a plurality of battery cells 20, the plurality of battery cells 20 include a first battery cell 21 and a second battery cell 22 that are adjacent to each other. The first battery cell 21 and the second battery cell 22 are arranged in a first direction x. The battery 10 further includes a heat insulation board 101. The heat insulation board 101 is provided between the first battery cell 21 and the second battery cell 22. The heat insulation board 101 includes a first heat insulation layer 1011, and the first heat insulation layer 1011 is a polymer matrix composite fiber board.

The polymer matrix composite fiber board is formed by compositing a polymer material as a matrix and a fiber as a reinforcement, and has the advantages of being high in temperature resistance, high in strength and less prone to deformation.

The heat insulation board 101 is provided between the first battery cell 21 and the second battery cell 22, so that when some of the battery cells 20 in the battery 10 undergo thermal runaway, the heat insulation board 101 can reduce the risk that the battery cells 20 undergoing the thermal runaway transfers heat to adjacent battery cells 20, thereby reducing the risk of the spread of thermal runaway. The heat insulation board 101 includes a first heat insulation layer 1011, the first heat insulation layer 1011 is a polymer matrix composite fiber board, and the polymer matrix composite fiber board is provided between the battery cells 20, so that the risk of the spread of thermal runaway in the battery 10 can be effectively reduced, and thus the reliability of the battery 10 can be improved.

Optionally, in an embodiment of the present application, the polymer matrix composite fiber board is a fiber-reinforced resin composite board.

The fiber-reinforced resin composite board is a high-strength and high-temperature-resistant heat insulation board that can withstand a high temperature of 1500°C. In addition, when pressed, the board will not break, can withstand a stress of 100 MPa and has a thermal conductivity of 0.2 W/(K·m) - 1 W/(K·m).

The fiber-reinforced resin composite board is prepared as a protective board by using a resin in polymer materials as a matrix. Compared with other polymer material matrices, the fiber-reinforced resin composite board has better high-temperature resistance and higher strength and is less prone to deformation.

In an embodiment of the present application, as shown in FIG. 5, the heat insulation board 101 is provided between a first wall 211 of the first battery cell 21 and a second wall 221 of the second battery cell 22, the first wall 211 is a wall of the first battery cell 21 having the largest surface area, and the second wall 221 is a wall of the second battery cell 2222 having the largest surface area.

The heat insulation board 101 is provided between the walls of two adjacent battery cells 20 that each have the largest surface area, such that the heat insulation board 101 can prevent the spread of thermal runaway of the battery cells 20 to a greater extent, which is more conducive to reducing the risk of the spread of thermal runaway in the battery 10.

It should be understood that it is also possible that the heat insulation board 101 is provided between other walls of two adjacent battery cells 20. If a battery cell 20 is surrounded by adjacent battery cells 20 on fourth sides, four side walls thereof may each be provided with a heat insulation board 101 opposite to the corresponding side wall, or may be provided according to the arrangement of the battery cells 20 in the battery 10 and the space requirements, which will not be limited in the present application.

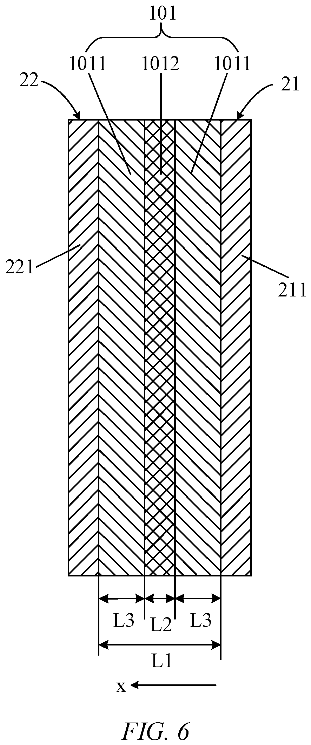

In an embodiment of the present application, as shown in FIG. 6, the heat insulation board 101 includes a second heat insulation layer 1012 and two first heat insulation layers 1011. The second heat insulation layer 1012 and the two first heat insulation layers 1011 are arranged in the first direction x, and the second heat insulation layer 1012 is located between the two first heat insulation layers 1011.

The first heat insulation layer 1011 is a fiber-reinforced resin composite board that has the advantages of high strength, no deformation or damage at a high temperature, etc., the second heat insulation layer 1012 is provided between the two first heat insulation layers 1011 to form a "sandwich" structure, so that the first heat insulation layer 1011 can protect the second heat insulation layer 1012 from being pressed to deform by the battery cells 20, allowing the second heat insulation layer 1012 to better provide heat insulation, and enabling the heat insulation board 101 to effectively reduce the risk of the spread of thermal runaway in the battery 10.

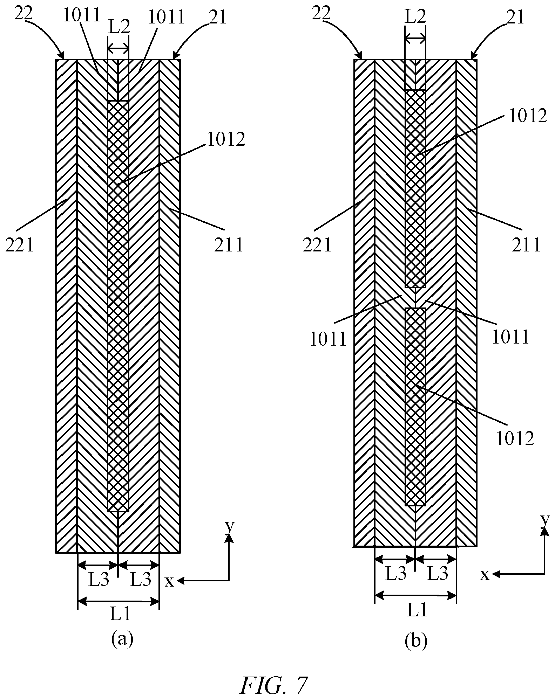

Optionally, in an embodiment of the present application, as shown in FIG. 7(a), the two first heat insulation layers 1011 are connected to each other at end portions in a second direction y. The second direction y is perpendicular to the first direction x, and only an illustrative direction of the second direction y is shown in FIG. 7(a), but it is not limited thereto.

The end portions of the two first heat insulation layers 1011 are connected to each other, and the second heat insulation layer 1012 is encapsulated between the two first heat insulation layers 1011, so that the second heat insulation layer 1012 is protected from being pressed to deform by the battery cells 20. In addition, the connection between the end portions of the two first heat insulation layers 1011 increases the structural strength of the external first heat insulation layers 1011.

Optionally, in an embodiment of the present application, as shown in FIG. 7(b), in the second direction y, the two first heat insulation layers 1011 are connected to each other in at least one position other than the end portions.

It should be understood that in an embodiment of the present application, in a third direction, the two first heat insulation layers 1011 may also be connected to each other in other positions except the end portions, and they are connected in at least one position. The third direction is perpendicular to the first direction x and the second direction y.

There are multiple connections between the two first heat insulation layers 1011, so that the structural strength of the first heat insulation layers 1011 is increased, the second heat insulation layer 1012 oppositely provided between the two first heat insulation layers 1011 provides better support, and the second heat insulation layer 1012 is not pressed to deform by the battery cells 20.

Optionally, in an embodiment of the present application, still referring to FIG. 7(b), the connection positions of the two first heat insulation layers 1011 are uniformly distributed in the second direction y.

Optionally, in an embodiment of the present application, the two first heat insulation layers 1011 are connected to each other at end portions in the third direction z.

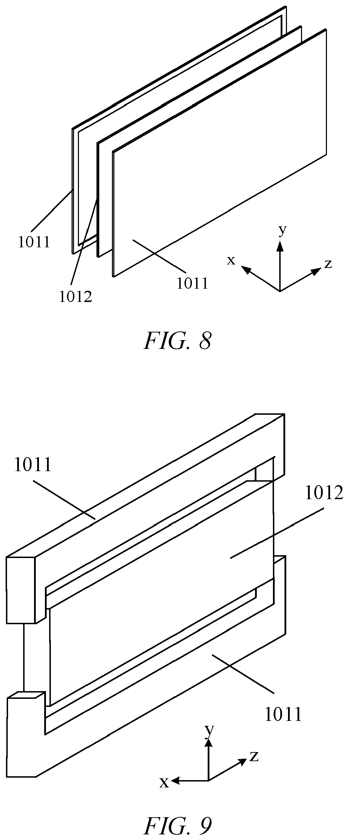

Specifically, as shown in FIG. 8, the first heat insulation layer is of a structure with a protruding periphery and a recessed central part. The two first heat insulation layers 1011 are connected to each other at end portions in the second direction y, and the two first heat insulation layers 1011 are also connected to each other at end portions in the second direction z. That is to say, the two first heat insulation layers 1011 are connected to each other at their respective four end portions, to form a sealed cavity. By placing the second heat insulation layer 1012 in the cavity, that is to say, by completely wrapping the second heat insulation layer 1012 with the first heat insulation layers 1011 and isolating the second heat insulation layer from the outside, the second heat insulation layer 1012 can be prevented more effectively from being pressed.

Optionally, in an embodiment of the present application, as shown in FIG. 9, two first heat insulation layers 1011 and one second heat insulation layer 1012 are arranged in the second direction y, the second heat insulation layer 1012 is located between the two first heat insulation layers 1011, and the two first heat insulation layers 1011 are connected to each other at the end portions in the third direction z.

Specifically, the two first heat insulation layers 1011 are arranged in the second direction y, and the two first heat insulation layers 1011 are connected to each other at the end portions in the third direction z, such that the two first heat insulation layers 1011 encloses a shape of a Chinese character " 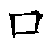 ", and the second heat insulation layer 1012 is located between the two first heat insulation layers 1011, that is, the second heat insulation layer 1012 is enclosed by the two first heat insulation layers 1011 respectively in the second direction z and the third direction y. In this case, when the battery cells 20 press the first heat insulation layers 1011 and the second heat insulation layer 1012, the first heat insulation layers 1011 are less prone to deformation due to the high strength thereof, and the dimension thereof in the first direction x is basically constant, making it very difficult for two adjacent battery cells 20 to approach the second heat insulation layer 1012, such that the second heat insulation layer 1012 is not pressed, and it is ensured that the second heat insulation layer 1012 effectively provides heat insulation.

Optionally, in an embodiment of the present application, the two first heat insulation layers 1011 may be integrally formed to have a structure in the shape of a Chinese character " 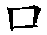 ", which will not be limited in the present application.

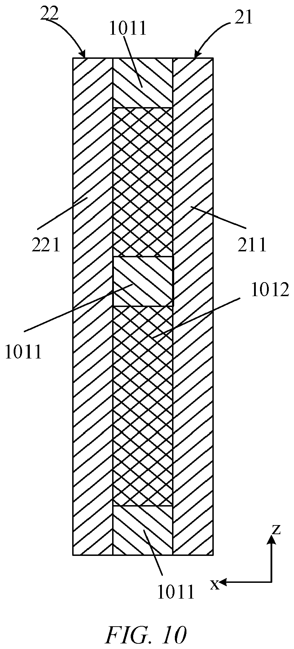

Optionally, in an embodiment of the present application, as shown in FIG. 10, in the third direction z, the two first heat insulation layers 1011 are connected to each other in at least one position other than the end portions.

It should be understood that in the second direction y, the two first heat insulation layers 1011 may also be connected to each other in other positions except the end portions, and they are connected in at least one position.

There are multiple connections between the two first heat insulation layers 1011, so that the structural strength of the first heat insulation layers 1011 is increased, the second heat insulation layer 1012 oppositely provided between the two first heat insulation layers 1011 provides better support, and the second heat insulation layer 1012 is not pressed to deform by the battery cells 20.

Optionally, in an embodiment of the present application, the connection positions of the two first heat insulation layers 1011 are uniformly distributed in the third direction z. Alternatively, the connection positions of the two first heat insulation layers 1011 are uniformly distributed in the second direction y.

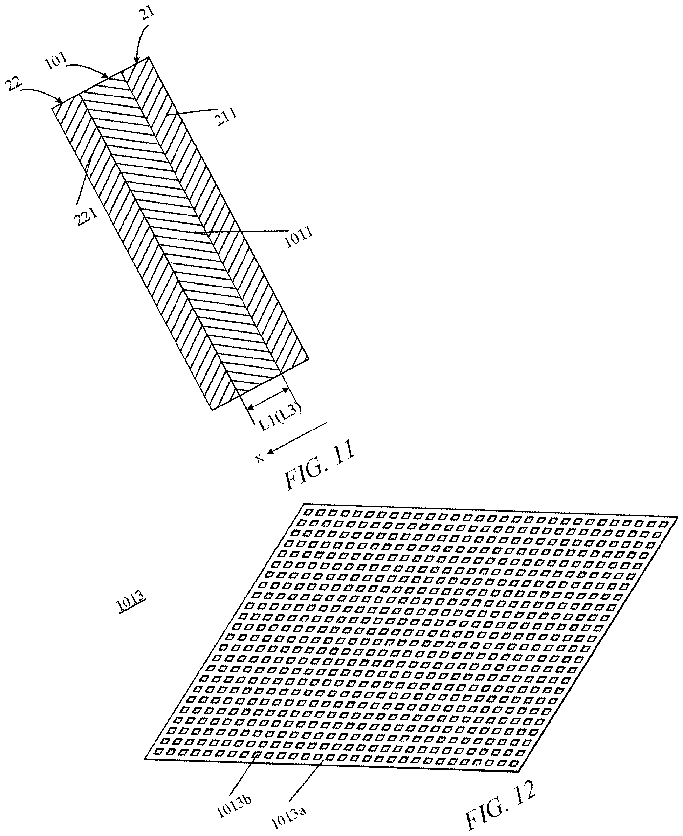

In an embodiment of the present application, as shown in FIGS. 6, 7 and 9-11, the dimension L1 of the heat insulation board 101 in the first direction x is 0.2 mm-5 mm. As shown in FIG. 11, when the heat insulation board 101 only includes a first heat insulation layer 1011, the dimension L1 of the heat insulation board 101 in the first direction x is the dimension L3 of the first heat insulation layer 1011 in the first direction x.

When the dimension L1 of the heat insulation board 101 in the first direction x is too small, the heat insulation board 101 has a poor heat insulation effect, and the heat insulation board 101 has a low strength, and is likely to be pressed to deform by the battery cells 20 on two sides, resulting in a poorer heat insulation effect; and when the dimension L1 of the heat insulation board 101 in the first direction x is too large, too much space is occupied thereby in the battery 10, and thus the energy density of the battery 10 is reduced. Therefore, the dimension L1 of the heat insulation board 101 is set to 0.2 mm-5 mm in the first direction x, so that it is ensured that the battery 10 has a high energy density while ensuring the high strength and the good heat insulation effect of the heat insulation board 101.

Optionally, in an embodiment of the present application, the dimension L1 of the heat insulation board 101 in the first direction x is 3 mm.

The dimension L1 of the heat insulation board 101 is set to 3 mm in the first direction x, so that the heat insulation board 101 has a high strength, is less likely to be pressed to deform, also does not deform at a high temperature, has a good heat insulation effect, can effectively reduce the risk of the spread of thermal runaway in the battery 10, and does not occupy too much space in the battery 10, so that it is ensured that the battery 10 has a high energy density.

In an embodiment of the present application, the dimension L1 of the heat insulation board 101 in the first direction x and the energy Q of the battery cell 20 satisfy: 2 × 10⁻³ mm/Wh ≤ L1/Q ≤ 10⁻² mm/Wh.

The energy of the battery cell refers to the amount of energy stored in the battery cell, and the energy of the battery cell is one of important performance indexes for evaluating the performance of the battery cell.

When the ratio of the dimension L1 of the heat insulation board 101 in the first direction x to the energy Q of the battery cell 20 is too small, that is, the dimension L1 of the heat insulation board 101 in the first direction x corresponding to the per-unit energy of the battery cell 20 is too small, the heat insulation effect of the heat insulation board 101 is poor; and when the energy Q of the battery cell 20 is constant, the greater L1/Q, that is, the greater L1, the more space is occupied in the battery 10, and the energy density of the battery 10 is then reduced. Therefore, by setting the condition that the ratio of the dimension L1 of the heat insulation board 101 in the first direction x to the energy Q of the battery cell 20 satisfies 2 × 10⁻³ mm/Wh ≤ L1/Q ≤ 10⁻² mm/Wh, it is ensured that the battery 10 has a high energy density while ensuring the good heat insulation effect of the heat insulation board 101.

Optionally, in an embodiment of the present application, L1/Q is 8 × 10⁻³ mm/Wh.

The ratio of the dimension L1 of the heat insulation board 101 in the first direction x to the energy Q of the battery cell 20 is set to 8 × 10⁻³ mm/Wh, so that the heat insulation board 101 has a good heat insulation effect, can effectively reduce the risk of the spread of thermal runaway in the battery 10, and does not occupy too much space in the battery 10, so that it is ensured that the battery 10 has a high energy density.

In an embodiment of the present application, a dimension L2 of the second heat insulation layer 1012 in the first direction x and the dimension L1 of the heat insulation board 101 in the first direction x satisfy: 0.2 ≤ L2/L1 ≤ 0.6.

When L2 is much less than L1, that is, L2/L1 is too small, the second heat insulation layer 1012 is thinner than the first heat insulation layer 1011, so the heat insulation effect provided by the second heat insulation layer 1012 is poor; and when L2/L1 is too large, the second heat insulation layer 1012 is thicker than the first heat insulation layer 1011, that is, the second heat insulation layer 1012 occupies most of the heat insulation board 101, so the heat insulation board 101 has a low strength and is likely to be pressed to deform by the battery cell 20, and the heat insulation effect thereof is affected. Therefore, by setting 0.2 ≤ L2/L1 ≤ 0.6, the heat insulation effect of the heat insulation board 101 can be ensured, and the risk of the spread of thermal runaway in the battery 10 can be effectively reduced.

Optionally, in an embodiment of the present application, as shown in FIGS. 6 and 7, a dimension L3 of the first heat insulation layer 1011 in the first direction x is 1 mm, and the dimension L2 of the second heat insulation layer 1012 in the first direction x is 1 mm.

In this way, the total dimension of the heat insulation board 101 formed by assembling one first heat insulation layer 1011 and two second heat insulation layers 1012 is 3 mm in the first direction x. It is ensured that the heat insulation board 101 has a high strength, is less prone to deformation and has a good heat insulation effect, and it is also ensured that the heat insulation board 101 does not occupy too much space in the battery 10, and that the battery 10 has a high energy density.

Optionally, in an embodiment of the present application, the second heat insulation layer 1012 is an aerogel felt.

The aerogel felt has the characteristics of being light in weight, easy to cut, low in density, inorganic, fireproof, wholly hydrophobic, green, environmentally friendly, etc., and the heat insulation effect of the aerogel felt is 2-5 times that of a traditional heat insulation material.

Optionally, in an embodiment of the present application, the second heat insulation layer 1012 is an air interlayer.

In this case, a cavity is formed between the two first heat insulation boards 101. The heat insulation board 101 with this structure not only have a certain structural strength, is less likely to be pressed to deform, is also less prone to deformation at a high temperature, and also has a certain heat insulation effect, so that the risk of the spread of thermal runaway in the battery 10 can be effectively reduced.

Optionally, in an embodiment of the present application, the first heat insulation layer 1011 includes a plurality of fiber-reinforced resin layers 1013, and the fiber-reinforced resin layers 1013 are formed by compositing a fiber material and a resin material.

The compositing process of the fiber material and the resin material is not limited in the present application. For example, as shown in FIG. 12, a single fiber material layer 1013a may be immersed in a resin material slurry, such that the resin material slurry is fully infiltrated into fiber pores 1013b in the single fiber material layer 1013a, and is then baked at a temperature of 60°C-120°C for 3-30 minutes to prepare the fiber-reinforced resin layer 1013. 1-20 fiber-reinforced resin layers 1013 are stacked and hot-pressed at a pressure of 0.1-10 MPa and a temperature of 100°C-200°C to prepare the first heat insulation layer 1011.

The present application also does not impose any limitation on the method for preparing the resin material slurry. For example, in an embodiment of the present application, the resin material slurry may be composed of an aqueous elastomeric paint, a resin material, a flame retardant, a dispersant, a coupling agent, silicon dioxide powders, and short fibers in a mass ratio of (35-55) : (15-34) : (15-20) : (1-3) : (0.5-3) : (1-3) : (0.5-3).

The fiber-reinforced resin material in the embodiment of the present application is a material that has a dark brown color, and good acid resistance, mechanical properties, and heat resistance. Even at a very high temperature, the fiber-reinforced resin material can also maintain the structural integrity and dimensional stability thereof and is widely applied to anti-corrosion engineering, adhesives and flame retardants.

The fiber-reinforced resin composite material has the characteristics of light weight, high strength, high rigidity and high temperature resistance, and the plurality of fiber-reinforced resin layers form the first heat insulation layer 1011. Therefore, the first heat insulation layer 1011 has the characteristics of high strength and high temperature resistance, and accordingly it is ensured that the heat insulation board 101 effectively reduces the risk of the spread of thermal runaway in the battery.

Optionally, in an embodiment of the present application, the resin material is a silicon-based aerogel modified resin or a high-temperature-resistant flame-retardant resin.

The silicon-based aerogel modified resin has the characteristic of low thermal conductivity, and the high-temperature-resistant flame-retardant resin has the characteristics of high temperature resistance and low thermal conductivity. Compared with common resin materials, the silicon-based aerogel modified resin and the high-temperature-resistant flame-retardant resin are composited with a fiber material to form a fiber-reinforced resin composite material that has the characteristics of better high temperature resistance and high strength, and the first heat insulation layer 1011 formed by the fiber-reinforced resin composite material can effectively reduce the risk of the spread of thermal runaway in the battery 10.

Optionally, in an embodiment of the present application, the fiber material is a ceramic fiber material.

Specifically, the fiber may be at least one of a glass fiber, a carbon fiber, a quartz fiber, a high silica fiber, an aluminum silicate fiber, a mullite fiber, a silicon carbide fiber, a silicon nitride fiber, an aluminum oxide fiber, a boron nitride fiber, a basalt fiber, a brucite fiber, and other fibers. The ceramic fiber has an outstanding high temperature resistance in the various fiber materials.

The ceramic fiber material has better high temperature resistance than other fiber materials, a composite material of the ceramic fiber material and the resin material has the characteristics of better high temperature resistance and high strength, and the first heat insulation layer formed by the composite material can effectively reduce the risk of the spread of thermal runaway in the battery.

Optionally, in an embodiment of the present application, the ceramic fiber material is silicon oxide or aluminum oxide.

The first heat insulation layer prepared by compositing the ceramic fiber material made from the silicon oxide or the aluminum oxide and the resin material has the best high temperature resistance.

An embodiment of the present application further provides a power consuming device, which may include a battery 10 in the above embodiments. Optionally, the power consuming device may be a vehicle 1, a ship, a spacecraft, etc., which will not be limited in the embodiments of the present application.

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions.

According to the test standards of GBT 1447-2005 Fiber-reinforced plastics composites - Determination of tensile properties, the tensile properties of the first heat insulation layer made from the fiber-reinforced resin material were tested. Test results are shown in Table 1. According to the test standards of GBT 5258-2008 Fiber-reinforced plastic composites - Determination of compressive properties in the in-plane direction, the compressive properties of the first heat insulation layer were tested. Test results are shown in Table 2. According to the test standards of GBT 1449-2005 Fiber-reinforced plastic composites-Determination of flexural properties, the flexural properties of the first heat insulation layer were tested. Test results are shown in Table 3. According to the test standards of GBT 30969-2014 Test method for short-beam shear strength of polymer matrix composite materials, the broken-beam shear properties of the first heat insulation layer were tested. Test results are shown in Table 4. According to the test standards of GBT 1843-2008 Plastics - Determination of Izod impact strength, the impact properties of the first heat insulation layer were tested. Test results are shown in Table 5.

**Table 1 Tensile property test on first heat insulation layers having different thicknesses**

| | Maximum force (N) | Tensile strength (MPa) | | |
|---|---|---|---|---|
| No. | Board of 3 mm | Board of 3 mm | Board of 2 mm | Board of 0.5 mm |
| 1 | 7754.87 | 103.40 | 132.84 | 119.39 |
| 2 | 8067.78 | 107.57 | 150.31 | 130.16 |
| 3 | 8015.57 | 106.87 | 133.03 | 129.64 |
| 4 | 7273.17 | 96.98 | 141.91 | 132.23 |
| 5 | 8286.20 | 110.24 | 150.52 | 126.72 |
| Average value | 7875.92 | 105.01 | 141.72 | 127.63 |
| Standard deviation | 383.46 | 5.11 | 8.74 | 5.01 |

**Table 2 Compressive property test on first heat insulation layers having different thicknesses**

| No. | Compressive strength (MPa) | | |
|---|---|---|---|
| | Board of 3 mm | Board of 2 mm | Board of 0.8 mm |
| 1 | 83.74 | 166.02 | 133.19 |
| 2 | 83.91 | 177.34 | 124.68 |
| 3 | 84.13 | 171.78 | 133.99 |
| 4 | 84.69 | 153.86 | 154.05 |
| 5 | 84.61 | 167.63 | 122.91 |
| 6 | 85.47 | 136.05 | 133.71 |
| 7 | 85.95 | 175.54 | 128.99 |
| 8 | 84.49 | 166.40 | 99.25 |
| 9 | 85.61 | 154.28 | 152.93 |
| 10 | 85.56 | 176.49 | / |
| Average value | 84.22 | 165.54 | 131.52 |
| Standard deviation | 0.42 | 13.02 | 15.45 |

**Table 3 Flexural property test on first heat insulation layers having different thicknesses**

| No. | Flexural strength (MPa) | | |
|---|---|---|---|
| | Board of 3 mm | Board of 2 mm | Board of 0.7 mm |
| Span | 48 mm | 32 mm | 12 mm |
| 1 | 194.56 | 205.16 | 409.64 |
| 2 | 202.92 | 213.53 | 386.62 |
| 3 | 179.18 | 199.12 | 294.71 |
| 4 | 182.51 | 206.87 | 270.57 |
| 5 | 193.07 | 199.02 | 289.38 |
| 6 | 191.84 | 242.03 | 284.79 |
| 7 | 186.25 | 200.38 | 290.59 |
| 8 | 188.25 | 218.99 | 271.47 |
| 9 | 196.04 | 189.23 | 381.78 |
| 10 | / | 208.67 | 377.86 |
| Average value | 190.51 | 208.30 | 325.74 |
| Standard deviation | 6.87 | 14.48 | 55.57 |

**Table 4 Broken-beam shear property test on first heat insulation layers having different thicknesses**

| No. | Board of 3 mm (with a span of 12 mm) | | Board of 2 mm (with a span of 8 mm) | |
|---|---|---|---|---|
| | Maximum force (N) | Shear strength (MPa) | Maximum force (N) | Shear strength (MPa) |
| 1 | 474.12 | 2.33 | 375.87 | 23.49 |
| 2 | 479.32 | 2.33 | 280.14 | 17.51 |
| 3 | 403.36 | 2.34 | 287.46 | 17.97 |
| 4 | 464.32 | 2.35 | 297.60 | 18.60 |
| 5 | 440.18 | 2.35 | 302.00 | 18.88 |
| 6 | 442.98 | 2.37 | 310.98 | 19.44 |
| 7 | 447.58 | 2.39 | 309.42 | 19.34 |
| 8 | 368.74 | 2.35 | 311.45 | 19.47 |
| 9 | 514.51 | 2.38 | 346.08 | 21.63 |
| 10 | 428.17 | 2.38 | / | / |
| Average value | 446.328 | 2.35 | 313.45 | 19.59 |
| Standard deviation | 40.93 | 0.02 | 29.9 | 1.87 |

**Table 5 Impact property test on first heat insulation layers having different thicknesses**

| No. | Impact strength (KJ/m²) | |
|---|---|---|
| | Board of 3 mm | Board of 2 mm |
| 1 | 67.69 | 45.3 |
| 2 | 70.23 | 48.5 |
| 3 | 63.07 | 42.2 |
| 4 | 77.60 | 46.2 |
| 5 | 67.60 | 51.1 |
| 6 | 68.22 | 43.9 |
| 7 | 71.29 | 41.4 |
| 8 | 61.34 | 50 |
| 9 | / | 51.1 |
| 10 | / | 46.3 |
| Average value | 68.38 | 46.6 |
| Standard deviation | 5.01 | 3.5 |

In addition, a hardness test was performed on the first heat insulation layer having a thickness of 3 mm, and test results are Shore Type D Hardness 87 and Barcol hardness 46.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery (10), **characterized by** comprising:
a plurality of battery cells (20), the plurality of battery cells (20) comprising a first battery cell (21) and a second battery cell (22) that are adjacent to each other, wherein the first battery cell (21) and the second battery cell (22) are arranged in a first direction (x); and
a heat insulation board (101), the heat insulation board (101) being provided between the first battery cell (21) and the second battery cell (22), wherein the heat insulation board (101) comprises a first heat insulation layer (1011), and the first heat insulation layer (1011) is a polymer matrix composite fiber board.

2. The battery (10) according to claim 1, **characterized in that** the polymer matrix composite fiber board is a fiber-reinforced resin composite board.

3. The battery (10) according to claim 1 or 2, **characterized in that** the heat insulation board (101) is provided between a first wall (211) of the first battery cell (21) and a second wall (221) of the second battery cell (22), the first wall (211) is a wall of the first battery cell (21) that has the largest surface area and is closest to the second battery cell (22), and the second wall (221) is a wall of the second battery cell (22) that has the largest surface area and is closest to the first battery cell (21).

4. The battery (10) according to any one of claims 1 to 3, **characterized in that** the heat insulation board (101) comprises a second heat insulation layer (1012) and two first heat insulation layers (1011), the second heat insulation layer (1012) and the two first heat insulation layers (1011) are arranged in the first direction (x), and the second heat insulation layer (1012) is located between the two first heat insulation layers (1011).

5. The battery (10) according to claim 4, **characterized in that** the two first heat insulation layers (1011) are connected to each other at end portions in a second direction (y), the second direction (y) being perpendicular to the first direction (x).

6. The battery (10) according to claim 5, **characterized in that** in the second direction (y), the two first heat insulation layers (1011) are connected to each other in at least one position other than the end portions.

7. The battery (10) according to claim 6, **characterized in that** the connection positions of the two first heat insulation layers (1011) are uniformly distributed in the second direction (y).

8. The battery (10) according to any one of claims 4 to 7, **characterized in that** the heat insulation board (101) has a dimension L1 of 0.2 mm-5 mm in the first direction (x).

9. The battery according to claim 8, **characterized in that** the heat insulation board (1011) has a dimension L1 of 3 mm in the first direction (x).

10. The battery according to claim 8, **characterized in that** the dimension L1 of the heat insulation board (101) in the first direction (x) and the energy Q of the battery cell satisfy: 2 × 10⁻³ mm/Wh ≤ L1/Q ≤ 10⁻² mm/Wh.

11. The battery according to claim 10, **characterized in that** L1/Q is 8 × 10⁻³ mm/Wh.

12. The battery (10) according to claim 8, **characterized in that** a dimension L2 of the second heat insulation layer (1012) in the first direction (x) and the dimension L1 of the heat insulation board (101) in the first direction (x) satisfy: 0.2 ≤ L2/L1 ≤ 0.6.

13. The battery (10) according to claim 12, **characterized in that** a dimension L3 of the first heat insulation layer (1011) in the first direction (x) is 1 mm, and the dimension L2 of the second heat insulation layer (1012) in the first direction (x) is 1 mm.

14. The battery (10) according to any one of claims 4 to 13, **characterized in that** the second heat insulation layer (1012) is an aerogel felt.

15. The battery (10) according to any one of claims 4 to 13, **characterized in that** the second heat insulation layer (1012) is an air interlayer.

16. The battery (10) according to any one of claims 1 to 15, **characterized in that** the first heat insulation layer (1011) comprises a plurality of fiber-reinforced resin layers, and the fiber-reinforced resin layers are formed by compositing a fiber material and a resin material.

17. The battery (10) according to claim 16, **characterized in that** the resin material is a silicon-based aerogel modified resin or a high-temperature-resistant flame-retardant resin.

18. The battery (10) according to claim 16 or 17, **characterized in that** the fiber material is at least one of a glass fiber, a ceramic fiber, a carbon fiber, a quartz fiber, a high silica fiber, an aluminum silicate fiber, a mullite fiber, a silicon carbide fiber, a silicon nitride fiber, an aluminum oxide fiber, a boron nitride fiber, a basalt fiber, a brucite fiber, an attapulgite fiber, a boron fiber, a carbon nanotube fiber, an aramid fiber, a polyimide fiber, and an ultra-high molecular weight polyethylene fiber.

19. The battery (10) according to any one of claims 16 to 18, **characterized in that** the fiber material is a ceramic fiber material.

20. The battery (10) according to claim 19, **characterized in that** the ceramic fiber material is silicon oxide or aluminum oxide.

21. A power consuming device, **characterized by** comprising: a battery (10) according to any one of claims 1 to 20, the battery (10) being configured to supply electric energy.
